Europäisches Patentamt

European Patent Office

Office européen des brevets

(11) Veröffentlichungsnummer: **0 492 046 A1**

# EUROPÄISCHE PATENTANMELDUNG

(21) Anmeldenummer: **91112844.5**

(22) Anmeldetag: **31.07.91**

(51) Int. Cl.⁵: **C09J 7/02**

(30) Priorität: **20.12.90 DE 4040917**

(43) Veröffentlichungstag der Anmeldung:
**01.07.92 Patentblatt 92/27**

(84) Benannte Vertragsstaaten:
**AT BE CH DE DK ES FR GB GR IT LI LU NL SE**

(71) Anmelder: **VORWERK & SOHN GmbH & Co. KG**
**Obere Lichtenplatzer Strasse 336**
**W-5600 Wuppertal 2(DE)**

(72) Erfinder: **Schäfer, Andreas**
**Kiescheckerweg 85**
**W-4000 Düsseldorf 30(DE)**

(74) Vertreter: **Honke, Manfred, Dr. et al**
**Patentanwälte Andrejewski, Honke & Partner**
**Theaterplatz 3 Postfach 10 02 54**
**W-4300 Essen 1(DE)**

(54) **Selbstklebendes Klebeband.**

(57) Es handelt sich um ein selbstklebendes Klebeband, dessen Träger als Mehrschichtfolie aus Polypropylen und einer Polyäthylen/Ethylenvinylacetat-Mischung ausgeführt ist. Die Klebeschicht besteht aus Acrylat-Dispersion. Ein solches Klebeband zeichnet sich dadurch aus, daß die Mehrschichtfolie beim Verbrennen oder Deponieren nicht zu Schad- und Problemstoffen führt.

EP 0 492 046 A1

Die Erfindung betrifft ein selbstklebendes Klebeband, mit einem Träger aus Kunststoffolie und einer auf dem Träger haftenden Klebeschicht.

Selbstklebende Klebebänder sind in verschiedenen Ausführungsformen bekannt. Insbesondere sind solche bekannt, bei denen der Träger aus einer PVC-Folie besteht. Solche Klebebänder werden bevorzugt für Elektroisolationen eingesetzt. Für die Installation in geschlossenen Räumen wird ausschließlich schwer entflammbares Weich-PVC als Trägermaterial verwendet. Für die Montage im Freien - jedenfalls dort, wo es auf die Schwerentflammbarkeit nicht ankommt - wird auch PE als Trägermaterial eingesetzt. PVC-Folie ist insofern nachteilig, als sie größere Mengen Halogen (Chlor) enthält, die bei der Verbrennung zur Bildung gefährlicher und giftiger Substanzen führt. Bei der Deponierung kann eine PVC-Folie zu Abwasserproblemen führen, bei Langzeiteinsatz zum Verlust der Weichmacher. PE-Folie ist insofern nachteilig als sie abbrennt, verhältnismäßig steif ist und ihre Verarbeitbarkeit durch starkes Knattern beim Abrollen beeinträchtigt ist.

Der weitaus größere Anteil der Klebebänder weist PVC als Trägermaterial auf. Denn auf den Einsatz von PVC-Folien konnte aus werkstofftechnischen Gründen bisher nicht verzichtet werden. Das gilt insbesondere bei der Elektroisolation für Reißkraft, Dehnung, Klebekraft, Schwerentflammbarkeit und Durchschlagfestigkeit bei der Wechselspannungsprüfung.

Der Erfindung liegt die Aufgabe zugrunde, ein selbstklebendes Klebeband der eingangs beschriebenen Art zu schaffen, welches sich durch hervorragende werkstofftechnische Eigenschaften auszeichnet und dennoch besonders umweltfreundlich ist.

Diese Aufgabe löst die Erfindung bei einem gattungsgemäßen Klebeband dadurch, daß der Träger als Mehrschichtfolie aus Polypropylen und einer Polyäthylen/Ethylenvinylacetat-Mischung ausgeführt ist. Vorzugsweise besteht die Klebeschicht aus einer modifizierten Acrylat-Dispersion und ist die Mehrschichtfolie als gleichsam Verbundfolie im Blasverfahren hergestellt.

Diese Maßnahmen der Erfindung haben zur Folge, daß sich das erfindungsgemäße Klebeband von den bekannten Produkten durch die folgenden Vorteile abhebt:

- Keine Verwendung von Halogenen,
- hinreichende Schwerentflammbarkeit,
- abwasserneutrale Deponierung,
- bei der Pyrolyse in Müllverbrennungsanlagen entstehen keine giftigen, korrodierenden und umweltgefährdenden Abgase,
- flexibel und anschmiegsam,
- alterungsstabil.

Hinzu kommt, daß selbstverständlich die für Elektroisolationen erforderliche Reißkraft, Dehnung, Klebekraft und - wie bereits erwähnt - Schwerentflammbarkeit erreicht werden. Darüber hinaus zeigt das erfindungsgemäße Klebeband keinen Durchschlag bei der üblichen Wechselspannungsprüfung. - Das erfindungsgemäße Klebeband ist ferner nicht nur für Elektroisolationen geeignet, sondern auch zum Bandagieren, Verpacken, Befestigen, Schützen und Abdecken, Warnen und Kennzeichnen. Es zeichnet sich durch ein Trägermaterial mit den gewünschten werkstofftechnischen Eigenschaften aus.

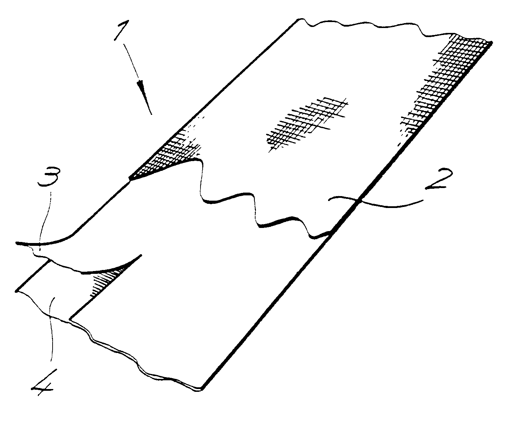

Im folgenden wird die Erfindung anhand einer lediglich ein Ausführungsbeispiel darstellenden Zeichnung näher erläutert. Die einzige Figur zeigt ausschnittsweise ein erfindungsgemäßes Klebeband, teilweise im Schnitt.

Das dargestellte selbstklebende Klebeband 1 weist einen Träger aus Kunststoffolie und eine auf dem Träger haftende Klebeschicht 2 auf. Der Träger ist als Mehrschichtfolie aus Polypropylen 3 und einer Polyäthylen/Ethylenvinylacetat-Mischung 4 ausgeführt. Die Klebeschicht 2 besteht aus einer modifizierten Acrylat-Dispersion. Die Mehrschichtfolie ist im Blasverfahren hergestellt.

**Patentansprüche**

1. Selbstklebendes Klebeband, mit einem Träger aus Kunststoffolie und eine auf dem Träger haftenden Klebeschicht, **dadurch gekennzeichnet**, daß der Träger als Mehrschichtfolie (3, 4) aus Polypropylen (3) und einer Polyäthylen/Ethylenvinylacetat-Mischung (4) ausgeführt ist.

2. Klebeband nach Anspruch 1, dadurch gekennzeichnet, daß die Klebeschicht (2) aus einer modifizierten Acrylat-Dispersion besteht.

3. Klebeband nach Anspruch 1 oder 2, dadurch gekennzeichnet, daß die Mehrschichtfolie im Blasverfahren hergestellt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | AT-A-350 698 (W.KORESKA GMBH)<br>* Ansprüche 1,3,4 *<br>--- | 1 | C09J7/02 |
| A | EP-A-0 375 862 (NITTO DENKO CORPORATION)<br>* Ansprüche 1,4,5,8 *<br><br>----- | 1 | |

**RECHERCHIERTE SACHGEBIETE (Int. Cl.5 )**

C09J

Der vorliegende Recherchenbericht wurde für alle Patentansprüche erstellt

| Recherchenort | Abschlußdatum der Recherche | Prüfer |
|---|---|---|
| DEN HAAG | 26 MAERZ 1992 | BUSCAGLIONE Y. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.12 (P0403)